# EUROPÄISCHE PATENTSCHRIFT

(11) **EP 0 993 553 B1**
(45) Veröffentlichungstag und Bekanntmachung des Hinweises auf die Patenterteilung: **16.06.2004**
(21) Anmeldenummer: 99948560.0
(22) Anmeldetag: 30.04.1999
(51) Int. Cl.: F04C 27/00, F16J 15/00

(54) **DICHTUNGSANORDNUNG AN EINEM WELLENZAPFEN EINES TROCKENLAUFENDEN ROTATIONSSCHRAUBENVERDICHTERS**
SEALING DEVICE ON A SHAFT JOURNAL OF A DRY-RUNNING HELICAL ROTARY COMPRESSOR
DISPOSITIF D'ETANCHEITE PLACE SUR UN BOUT D'ARBRE D'UN COMPRESSEUR HELICOIDAL A PISTON SEC

(30) Priorität: 30.04.1998 DE 29807796 U
(43) Veröffentlichungstag der Anmeldung: 19.04.2000
(73) Patentinhaber: GHH-RAND Schraubenkompressoren GmbH & Co. KG., 46145 Oberhausen (DE)
(72) Erfinder: ACHTELIK, Carsten, D-46539 Dinslaken (DE); GILFERT, Karl-Heinz, D-46145 Oberhausen (DE); HEINZ, Arno, D-46149 Oberhausen (DE); MÜRMANN, Walter, D-46149 Oberhausen (DE)
(74) Vertreter: Glawe, Delfs, Moll & Partner
(86) Internationale Anmeldenummer: PCT/EP1999/002961
(87) Internationale Veröffentlichungsnummer: WO 1999/057440

(56) Entgegenhaltungen:
- EP-A- 0 859 154
- US-A- 5 364 245

## Beschreibung

Bei trockenlaufenden Rotationsschraubenverdichtern wird dem Verdichterraum kein Öl für Schmierung, Kühlung und Abdichtung zwischen den Rotoren zugeführt. Die Rippen des Hauptläufers und Nuten des Nebenläufers greifen "trocken" und trotzdem abdichtend ineinander. Solche Schraubenverdichter sind aufgrund der Ölfreiheit des Verdichterraums besonders geeignet für die Anwendung in pneumatischen Fördereinrichtungen, z.B. für das Befüllen und Entleeren von Silos, Tanks, Tankfahrzeugen und dgl. mit Schüttgütern. Insbesondere bei der pneumatischen Förderung von empfindlichen Gütern wie Lebensmitteln oder Chemikalien ist es wichtig, daß der Förderluftstrom in hohem Maße frei von Ölanteilen ist.

Bei trockenlaufenden Schraubenrotoren muß durch geeignete Abdichtung der Wellenzapfen verhindert werden, daß Öl aus den ölgeschmierten Lagern der Wellenzapfen durch Leckage entlang den Wellenzapfen in den Verdichterraum gelangt. Aus GB-A-1189856 und EP-A-0859154 ist es bereits bekannt, auf den Wellenzapfen eines Rotationsschraubenverdichters nebeneinander einen gewöhnlichen Dichtring und einen Öldichtring anzuordnen, die voneinander durch einen mit der Außenluft verbundenen Ringraum getrennt sind. Gewöhnliche Dichtringe sind jedoch zur Abdichtung von schnell rotierenden Wellenzapfen, die Umfangsgeschwindigkeiten von 55 - 150 m/sec erreichen können, wegen des hohen Verschleisses ungeeignet. Es ist andererseits bekannt, den Wellenzapfen eines trockenlaufenden Rotationsschraubenverdichters durch zwei nebeneinanderliegende, berührungsfreie Labyrinthdichtungen abzudichten, von denen die dem ölgeschmierten Lager näher liegende Labyrinthdichtung in Form eines Ölrückführgewindes ausgebildet ist. Es hat sich jedoch gezeigt, daß solche berührungsfreien Labyrinthdichtungen die Leckage von Öl entlang dem Wellenzapfen zum Verdichterraum, insbesondere bei hohem Drukkunterschied an der Saugseite des Verdichters, nicht immer zuverlässig verhindern können.

Aus DE-A 24 41 520 ist eine Wellendichtung für einen Schraubenrotorverdichter mit Wassereinspritzung bekannt, die mehrere den Rotorzapfen umgebende Dichtungsbunde aufweist, zwischen denen Ringkammern liegen, von denen eine Ringkammer mit vom Verdichter verdichtetem Gas als Sperrgas beaufschlagt wird und eine andere Kammer eine Drainagekammer für Lageröldrainage ist. Die Dichtungsbunde sind Labyrinthdichtungsbunde, einer davon kann auch eine Berührungsdichtung sein. Diese Wellendichtung ist eine dynamische Dichtung, die Sperrgas unter Druck verwendet, welches vom Fördergasstrom des Verdichters abgezweigt werden muß und deshalb einen Leistungsverlust bedeutet.

Der Erfindung liegt die Aufgabe zugrunde, eine ohne Sperrgas arbeitende Dichtungsanordnung mit besonders hoher Dichtwirkung und trotzdem guter Verschleißfestigeit für einen Wellenzapfen eines trockenlaufenden Rotationsschraubenverdichters zu schaffen.

Die erfindungsgemäße Lösung der Aufgabe ist im Anspruch 1 angegeben. Die Unteransprüche beziehen sich auf vorteilhafte weitere Ausgestaltungen der Erfindung.

Eine Ausführungsform der Erfindung wird anhand der Zeichnungen näher erläutert. Es zeigt:
Fig. 1 im Axialschnitt eine erfindungsgemäße Ausführungsform einer Dichtunganordnung an einem Wellenzapfen des Hauptläufers eines Schraubenverdichters;
Fig. 2 in größerem Maßstab einen Schnitt durch einen Lippendichtring, wie er bei der erfindungsgemäßen Dichtungsanordnung vorzugsweise verwendet wird;
Fig. 3 eine geänderte Ausführungsform der Dichtungsanordnung.

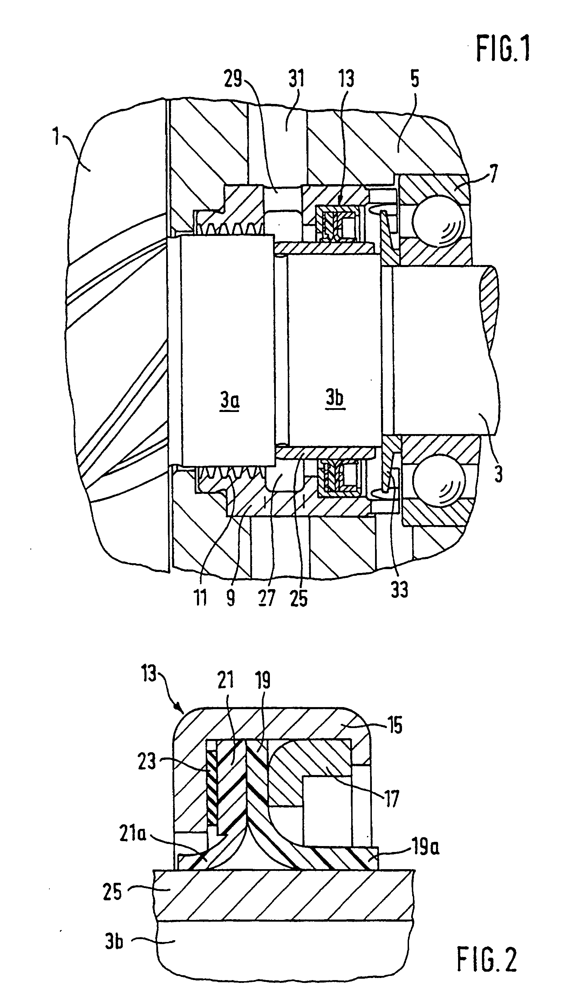

Fig. 1 ist ein Ausschnitt aus einem Axialschnitt durch einen Schraubenkompressor und zeigt schematisch einen der Rotoren, z.B. den Hauptläufer (Rippenrotor) 1, dessen Wellenzapfen 3 im Gehäuse 5 durch ein Wälzlager 7 gelagert ist. Das Wälzlager 7 ist ölgeschmiert, vorzugsweise durch eine Schmiereinrichtung (nicht dargestellt), die einen Ölnebel erzeugt.

In das Gehäuse 5 ist ein mit diesem fest verbundener Gehäusering 9 eingesetzt. In dem dem Rotor 1 näher liegenden Abschnitt des Gehäuserings 1 ist an dessen innerer Umfangsfläche eine Labyrinthspaltdichtung 11. in Form mehrerer nebeneinanderliegender Ringrippen angeformt. Diese wirkt berührungsfrei mit der zylindrischen Umfangsfläche eines Abschnitts 3a des Wellenzapfens 3 zusammen, um die Gasabdichtung zu bewirken.

An dem dem Wälzlager 7 näher liegenden Abschnitt des Gehäuserings 9 ist in den Gehäusering 9 ein Lippendichtring 13 eingesetzt, der in Fig. 2 mehr im Detail dargestellt ist.

Der in Fig. 2 dargestellte Lippendichtring 13 besteht aus einem äußeren Haltering 15 und einem inneren Haltering 17, zwischen denen zwei Lippenringe 19, 21 und eine Flachdichtung 23 eingespannt sind, die aus flexiblen, elastomeren Materialien bestehen. Die Dichtlippen 19a, 21a der beiden Lippenringe 19, 21 sind unterschiedlich lang. Die Dichtlippe 19a des Lippenrings 19, die in Richtung auf das Lager 7 hin abgebogen ist, ist länger als die Dichtlippe 21a des Dichtrings 21, die in Richtung auf den Rotor hin abgebogen ist.

Im Bereich des Lippendichtrings 13 ist auf einen Abschnitt 3b des Wellenzapfens 3 ein Laufring 25 befestigt, vorzugsweise aufgeschrumpft. Der Laufring 25, der z.B. ein handelsüblicher Laufring für ein Wälzlager sein kann, besteht aus Stahl mit speziell gehärteter Umfangsfläche, an der die Lippen 19a und 21a des Lippendichtrings 13 anliegen. Der Außendurchmesser des Laufringes 25 ist kleiner als der Außendurchmesser des mit der Labyrinthdichtung 11 zusammenwirkenden Abschnitts 3a des Wellenzapfens.

Die gehärtete und extrem präzis bearbeitete, z.B. polierte, Außenfläche des Laufrings 25 ergibt eine besonders verschleißmindernde Anlagefläche für die Dichtlippen des Lippendichtrings 13. Die Lippenringe 19, 21 bestehen vorzugsweise aus einem elastomeren Material auf der Basis von Fluorkohlenwasserstoffpolymer.

In dem Gehäusering 9 ist zwischen der Labyrinthspaltdichtung 11 und dem Lippendichtring 13 eine umlaufende Ringnut 27 ausgebildet, die durch eine Öffnung 29 des Gehäuserings 9 mit einem zur Atmosphäre hin offenen Raum 31 des Gehäuses 5 verbunden ist.

Zwischen dem Lager 7 und dem Lippendichtring 13 ist auf dem Wellenzapfen 3 ein Ring 33 mit einem Außenflansch befestigt, der einen Spritzschirm bildet, der den direkten Zutritt von in das Lager 7 eingespritzten Öltröpfchen zum Lippendichtring 13 verhindert.

Im Betrieb des Schraubenverdichters wirkt die Labyrinthspaltdichtung 11 in üblicher Weise als Gasdichtung, während der Lippendichtring 13 als Öldichtung mit besonders hoher Dichtwirkung wirkt, wodurch die Leckage von Öl aus dem Lager 7 an dem Lippendichtring 13 vorbei in Richtung auf die Labyrinthdichtung 11 mit hoher Sicherheit verhindert wird. Die im Bereich der Ringnut 27 des Gehäuserings 9 liegende Stufe zwischen der Außenfläche des Laufrings 25 und der Außenfläche des Abschnitts 3a des Wellenzapfens wirkt einem Kriechen von Öl entlang der Oberfläche entgegen. Etwaige flüchtige Bestandteile des Öls, die in den Bereich der Ringnut 27 gelangen, entweichen über die Lüftungsöffnung 29 an die Außenluft.

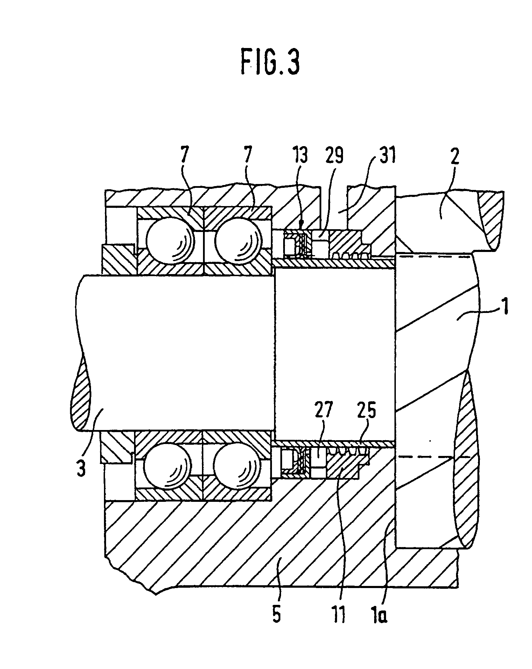

Bei der in Fig. 3 dargestellten Ausführungsform ist der Wellenzapfen 3 des trockenlaufenden Rotors 1 eines Schraubenkompressors in dem Gehäuse 5 mittels öl- oder fettgeschmierten Wälzlagern 7 im Gehäuse 5 gelagert. Ein zweiter Rotor, der mit dem Rotor 1 in bekannter Weise ein Eingriff ist, ist bei 2 angedeutet.

Wie bei der Ausführungsform nach Fig. 1 sind in dem Gehäuse 5 ein dem Wälzlager 7 benachbarter Lippendichtring 13 und ein dem Rotor 1 benachbarter Labyrinthdichtring 11 eingesetzt. Dazwischen befindet sich ein Ringraum 27, der über eine Lüftungsöffnung 29 mit einem Entlüftungskanal 31 des Gehäuses verbunden ist und über diesen mit der Außenluft in Verbindung steht.

Auf dem Wellenzapfen 3 ist ein Laufring 25 von solcher axialen Länge befestigt, z. B. aufgeschrumpft, daß er nicht nur mit dem Lippendichtring 13 zusammenwirkt, sondern sich auch über den Bereich des Labyrinthdichtrings 11 erstreckt. Der wie bei der voherigen Ausführungsform speziell gehärtete und polierte Laufring 25 hat zwar im normalen Fall keine Berührung mit dem Lippendichtring 11. Sollte es aber doch einmal durch eine Betriebsstörung zu einer Berührung zwischen dem Lippendichtring 11 und dem Laufring 25 kommen, so wird hierdurch nicht der Wellenzapfen 3, sondern nur der Laufring 25 beschädigt, so daß durch bloßes Auswechseln des Laufrings 25 der einwandfreie Dichtungszustand wieder hergestellt werden kann. Außerdem hat der verlängerte Laufring gemäß Fig. 3 den weiteren Vorteil, daß er als Abstandshalter zwischen der Stirnfläche 1a des Rotors 1 und den Wälzlagern 7 dienen kann. Hierdurch wird erst möglich, durch exakte Bemessung der Axiallänge des Laufrings 25 gleichzeitig den stirnseitigen Spalt zwischen der Stirnfläche 1a des Rotors 1 und der entsprechenden Stirnfläche des Gehäuses 5 sehr präzise einzustellen.

## Patentansprüche

1. Dichtungsanordnung an einem Rotorwellenzapfen eines trockenlaufenden Rotationsschraubenverdichters zur Abdichtung zwischen dem Rotor (1) und einem ölgeschmierten Lager (7) des Wellenzapfens (3),
**dadurch gekennzeichnet, daß** ein den Wellenzapfen (3) umgebender Gehäusering (9) in seinem dem Rotor (1) näher liegenden Abschnitt eine an seiner inneren Umfangsfläche angeformte Labyrinthspaltdichtung (11) aufweist, an seinem dem ölgeschmierten Lager (7) näher liegenden Abschnitt einen Lippendichtring (13) trägt und dazwischen eine Ringnut (27) mit Lüftungsöffnung (29) nach außen aufweist,
und daß der Wellenzapfen (3) eine der Labyrinthspaltdichtung (11) gegenüberstehende zylindrische Umfangsfläche (3a) aufweist und einen auf dem Wellenzapfen befestigten, mit dem Lippendichtring (13) zusammenwirkenden Laufring (25) aus gehärtetem Material trägt.

2. Dichtungsanordnung nach Anspruch 1,
**dadurch gekennzeichnet, daß** der Lippendichtring (13) zwei in entgegengesetzte Richtungen abgebogene, auf dem Laufring aufliegende Dichtlippen (19a, 21a) von unterschiedlicher Länge aufweist, wobei die längere Dichtlippe (19a) zum ölgeschmierten Lager (7) hin gerichtet ist.

3. Dichtungsanordnung nach Anspruch 1 oder 2,
**dadurch gekennzeichnet, daß** zwischen dem ölgeschmierten Lager (7) und dem Lippendichtring (13) ein ringförmiger Spritzschirm (33) angeordnet ist.

4. Dichtungsanordnung nach einem der Ansprüche 1 bis 3,
**dadurch gekennzeichnet, daß** der Laufring (25) einen kleineren Außendurchmesser hat als die der Labyrinthspaltdichtung (11) gegenüberstehende Umfangsfläche (3a) des Wellenzapfens.

5. Dichtungsanordnung nach einem der Ansprüche 1 bis 3,
**dadurch gekennzeichnet, daß** der Laufring 25 auch die der Labyrinthspaltdichtung 11 gegenüberstehende Umfangsfläche des Wellenzapfens bildet.

6. Trockenlaufender Rotationsschraubenverdichter, bei dem jeder der vier Wellenzapfen am saug- und druckseitigen Ende des Hauptläufers und des Nebenläufers mit einer Dichtungsanordnung mit einem der Ansprüche 1 bis 5 abgedichtet ist.

## Claims

1. Sealing arrangement on a rotor shaft peg of a dry-running rotary screw compressor for establishing a seal between the rotor (1) and an oil-lubricated bearing (7) of the shaft peg (3), **characterized in that** a housing ring (9) surrounding the shaft peg (3) presents in its section located closer to the rotor (1) a labyrinth gap seal (11) formed on the internal circumferential surface thereof and in its section located closer to the oil-lubricated bearing (7) bears a lip seal ring (13), and between said seals it has a ring groove (27) with ventilation opening (29) towards the outside, and
**in that** said shaft peg (3) presents a cylindrical circumferential surface (3 a) opposite the labyrinth gap seal (11) and a bearing race (25) made of hardened material, which is attached to said shaft peg and works in cooperation with the lip seal ring (13).

2. Sealing arrangement according to Claim 1, **characterized in that** the lip seal ring (13) presents two sealing lips (19a, 21a), which are bent in opposite directions, and are in contact with said bearing race, the longer sealing lip (19a) being directed towards the oil-lubricated bearing (7).

3. Sealing arrangement according to Claim 1 or 2, **characterized in that** between the oil-lubricated bearing (7) and the lip seal ring (13) a ring-shaped spray shield (33) is arranged.

4. Sealing arrangement according to one of Claims 1-3, **characterized in that** the bearing race (25) has a smaller external diameter than the circumferential surface (3a) of the shaft peg, which is located opposite the labyrinth gap seal (11).

5. Sealing arrangement according to one of Claims 1-3, **characterized in that** the bearing race (25) also forms the circumferential surface of the shaft peg, located opposite the labyrinth slit seal (11).

6. Dry-running rotation screw compressor, in which each one of the four shaft pegs at the suction- and pressure-side ends of the main rotor and the secondary rotor forms a seal with a sealing arrangement according to one of Claims 1-5.

## Revendications

1. Dispositif d'étanchéité sur un tourillon d'arbre de rotor d'un compresseur rotatif à vis, fonctionnant à sec, pour assurer l'étanchéité entre le rotor (1) et un palier (7) lubrifié à l'huile du tourillon d'arbre (3), **caractérisé en ce qu'**une bague de carter (9) entourant le tourillon (3) présente, dans son segment situé plus près du rotor (1), une étanchéité à fente en labyrinthe (11) formée sur sa surface périphérique intérieure, sur son segment situé plus près du palier (7) lubrifié à l'huile, une bague d'étanchéité à lèvres (13) et, entre elles, une rainure annulaire (27) avec orifice d'aération (29) vers l'extérieur, et **en ce que** le tourillon d'arbre (3) présente une surface périphérique (3a) cylindrique faisant face à l'étanchéité à fente en labyrinthe (11), et porte une bague de roulement (25) en matériau trempé, fixé sur le tourillon d'arbre et coopérant avec la bague d'étanchéité à lèvres (13).

2. Dispositif d'étanchéité selon la revendication 1, **caractérisé en ce que** la bague d'étanchéité à lèvres (13) comporte deux lèvres d'étanchéité (19a, 21a) de longueur différente, repliées en sens opposés et reposant sur la bague de roulement, la lèvre d'étanchéité plus longue (19a) étant dirigée vers le palier (7) lubrifié à l'huile.

3. Dispositif d'étanchéité selon la revendication 1 ou 2, **caractérisé en ce qu'**une protection contre les projections (33) de forme annulaire est disposée entre le palier (7) lubrifié à l'huile et la bague d'étanchéité à lèvres (13).

4. Dispositif d'étanchéité selon l'une des revendications 1 à 3, **caractérisé en ce que** la bague de roulement (25) présente un plus petit diamètre extérieur que la surface périphérique (3a), opposée à l'étanchéité à fente en labyrinthe (11), du tourillon d'arbre.

5. Dispositif d'étanchéité selon l'une des revendications 1 à 3, **caractérisé en ce que** la bague de roulement (25) forme aussi la surface périphérique du tourillon d'arbre opposée à l'étanchéité à fente en labyrinthe (11).

6. Compresseur rotatif à vis fonctionnant à sec, dans lequel chacun des quatre tourillons d'arbre est rendu étanche, à l'extrémité côté aspiration et côté refoulement du rotor principal et du rotor secondaire, par un dispositif d'étanchéité selon l'une des revendications 1 à 5.
